# EUROPÄISCHE PATENTSCHRIFT

(11) **EP 2 303 677 B1**
(45) Veröffentlichungstag und Bekanntmachung des Hinweises auf die Patenterteilung: **27.07.2016**
(21) Anmeldenummer: 10718053.1
(22) Anmeldetag: 10.04.2010
(51) Int. Cl.: G05G 1/60, A63B 23/035, A63B 23/00, A63B 22/00, B62M 3/08

(54) **FUSSSCHALEN-VORRICHTUNG EINES MUSKELTRAININGS-GERÄTES**
FOOT SHELL APPARATUS FOR A MUSCLE TRAINING DEVICE
DISPOSITIF À COQUE REPOSE-PIEDS D'UN APPAREIL DE MUSCULATION

(30) Priorität: 18.06.2009 DE 102009029755
(43) Veröffentlichungstag der Anmeldung: 06.04.2011
(73) Patentinhaber: medica-Medizintechnik GmbH, 88454 Hochdorf (DE)
(72) Erfinder: MAY, Christian, 78464 Konstanz (DE)
(74) Vertreter: Hentrich Patentanwälte PartG mbB
(86) Internationale Anmeldenummer: PCT/DE2010/000412
(87) Internationale Veröffentlichungsnummer: WO 2010/145629

(56) Entgegenhaltungen:
- FR-A- 396 563
- FR-A1- 2 876 657
- US-A- 493 696
- US-A- 605 536
- US-A- 5 456 138

## Beschreibung

Die Erfindung betrifft eine Fußschalen-Vorrichtung für ein Muskeltrainings-Gerät, mit einer Fußschale mit einer Trittfläche und einer die Trittfläche mindestens teilweise begrenzenden Seitenwand sowie einer Fixiereinrichtung zum Fixieren eines menschlichen Fußes in der Fußschale.

Fußschalen-Vorrichtungen der eingangs genannten Art werden im Stand der Technik verwendet, um die Füße eines ein Muskeltraining durchführenden Patienten lösbar fest mit denjenigen Elementen eines Muskeltrainings-Gerätes zu verbinden, die für einen über die Füße vorzunehmenden Krafteintrag in das Trainings-Gerät vorgesehen sind. Die bekannten Fußschalen-Vorrichtungen weisen jedoch den Nachteil auf, dass sie zum Zweck einer Fixierung eines eingebrachten Fußes Schwenkeinrichtungen benötigen, die klobig, schwer, aufwendig in der Konstruktion und bei der Fixierung eines Fußes umständlich in der Handhabung sind.

Die FR 2876657 A1 offenbart eine Fußschalen-Vorrichtung, wobei jeder Fuß im Pedal mit einem Riemen fixierbar ist. Der Riemen besitzt ein freies Ende, an dem eine Schnalle befestigt ist. Die Fußschalen-Vorrichtung besitzt an der dem Außenrist zugewandten Seite eine gerippte Zunge, die in die Schnalle eingeführbar ist und deren Verzahnung die Fixierung des Patientenfußes bereitstellt. Hierbei ist von Nachteil, dass die hier gezeigte Fixiereinrichtung schwierig zu öffnen und zu schließen ist.

Aufgabe der Erfindung ist es deshalb, eine Fuß-FixierEinrichtung für eine Fußschalen-Vorrichtung eines Muskeltrainings-Gerätes zu schaffen, die bei kleinen Abmessungen und geringem Gewicht einfach in der Handhabung ist.

Für eine Fußschalen-Vorrichtung der eingangs genannten Art wird diese Aufgabe erfindungsgemäß dadurch gelöst, dass die Fixiereinrichtung als arretierbar schwenkbarer Bügel ausgebildet ist, dessen Schwenklager eine im Wesentlichen parallel zur Längsachse der Fußschale ausgerichtete Schwenkachse aufweist und in einer mindestens indirekt mit der Trittfläche fest verbundenen kompakten Lagerungseinheit vorgesehen ist, die an einer dem Innenrist eines Patientenfußes nahen inneren Seitenwand der Fußschale befestigt ist und über diese innere Seitenwand mit der Trittfläche fest verbunden ist.

Bevorzugte Ausführungsformen der Erfindung sind Gegenstand der Unteransprüche.

Bei der erfindungsgemäßen Vorrichtung wird durch die Merkmalskombination, dass die Fixiereinrichtung als arretierbar schwenkbarer Bügel ausgebildet ist, dessen Schwenklager eine im Wesentlichen parallel zur Längsachse der Fußschale ausgerichtete Schwenkachse aufweist und in einer mindestens indirekt mit der Trittfläche fest verbundenen kompakten Lagerungseinheit vorgesehen ist, die an einer dem Innenrist eines Patientenfußes nahen inneren Seitenwand der Fußschale befestigt ist und über diese innere Seitenwand mit der Trittfläche fest verbunden ist, erreicht, dass ein Fuß eines Nutzers zum Einen besonders schnell und effektiv im Bereich einer Fußschale lösbar fixierbar ist und zum Anderen auch besonders schnell aus dem Bereich einer Fußschale lösbar ist, wobei die von dem Bügel gebildete Fixiereinrichtung bei leichter Erreichbarkeit seitens eines Nutzers vom Gewicht her leicht ist und Platz sparend im Bereich der Fußschale unterbringbar ist, dessen Schwenklager eine parallel zur Längsachse der Fußschale ausgerichtete Schwenkachse aufweist.

Gemäß einer ersten bevorzugten Ausführungsform der erfindungsgemäßen Vorrichtung ist vorgesehen, dass der Bügel in Richtung der Oberseite eines auf der Trittfläche platzierten Fußes konkav gebogen ausgebildet ist.

Gemäß einer anderen bevorzugten Ausführungsform der erfindungsgemäßen Vorrichtung ist vorgesehen, dass das Schwenklager des Bügels ausgebildet ist, um eine lösbare Arretierung über einen vorgegebenen Schwenkbereich sicherzustellen. Um eine lösbare Arretierung über den vorgegebenen Schwenkbereich sicherzustellen, ist dabei vorzugsweise eine eine Sperrverzahnung aufweisende Rastereinheit vorgesehen.

Der Schwenkbereich ist vorzugsweise ausgelegt, um ausgehend von einer Position des Bügels direkt oberhalb der Oberfläche eines in der Fußschale platzierten Fußes einen Winkelbereich von mindestens 80° zu umfassen.

Gemäß einer wichtigen bevorzugten Ausführungsform der erfindungsgemäßen Vorrichtung ist vorgesehen, dass die insgesamte Lagerungseinheit im Innenbereich der Fußschale angeordnet ist. Die insgesamte Lagerungseinheit ist so schmal ausgebildet, dass eine Bewegung eines im Innenbereich der Fußschale platzierten Fußes seitens der Lagerungseinheit nur unwesentlich eingeschränkt ist.

Die Seitenwand ist vorzugsweise einstückig gebogen ausgeführt und umschließt den Fuß vorzugsweise mindestens im Bereich der Ferse sowie der Fußseiten.

Der Bügel der erfindungsgemäßen Vorrichtung ist vorzugsweise aus einer ersten Position, in der die Fußschale für ein Ansetzen eines Fußes auf die Trittfläche geöffnet ist, gegen die Kraft eine Feder reversibel in eine arretierbare zweite Position überführbar, in der der Fuß mittels des Bügels in der Fußschale gefangen ist, wobei der Bügel mittels der Feder vorgespannt ist, um bei Lösung der Arretierung aus einer zweiten Position in die erste Position zurückzuschwenken.

Gemäß einer weiteren bevorzugten Ausführungsform der erfindungsgemäßen Vorrichtung ist vorgesehen, dass ein Ende des Bügels in dem Schwenklager mit einer drehbar gelagerten, im Bereich ihrer Mantelfläche gezahnten Scheibe verbunden ist, deren Zähne mit einer Kante eines Bolzens zusammenwirken, der mittels einer Feder vorgespannt ist, um die Scheibe in einer zweiten Position zu arretieren.

Die Kante kann an einem Vorsprung des Bolzens ausgebildet sein.

Der Bolzen ist in der Lagerungseinheit vorzugsweise reziprozierbar linear verschiebbar gelagert und dabei gegen die Kraft der Feder bewegbar, um die Kante aus einem Eingriff mit einem Zahn der Scheibe zu nehmen, um den Bügel aus einer Arretierung in einer zweiten Position zu lösen.

vorzugsweise ist zum Lösen des Bügels aus einer Arretierung in einer zweiten Position ein Hebel vorgesehen, dessen freies erstes Ende von Hand zu betätigen ist und dessen dem ersten Ende gegenüberstehendes zweites Ende mit dem Bolzen zusammenwirkt, um den Bolzen gegen die Kraft der Feder zu bewegen. Das zweite Ende des Hebels kann dabei an einem an dem Bolzen vorgesehenen Vorsprung angesetzt sein.

Die erfindungsgemäße Vorrichtung wird im Folgenden anhand einer bevorzugten Ausführungsform erläutert, die in den Figuren der Zeichnung dargestellt ist. Darin zeigen:
- Fig.1: eine bevorzugte Ausführungsform der erfindungsgemäßen Vorrichtung in einer Ansicht von schräg oben;

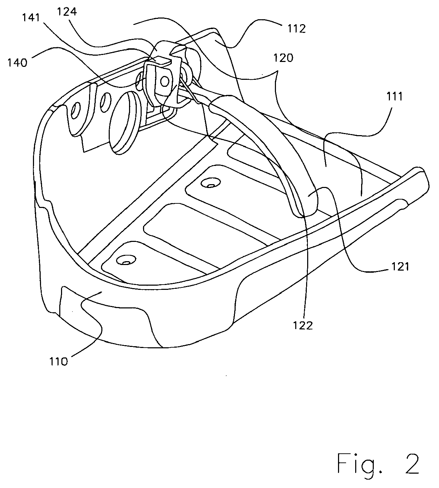

- Fig.2: eine bevorzugte Ausführungsform der erfindungsgemäßen Vorrichtung in einer Ansicht von schräg oben;
- Fig.3: die in Figur 1 dargestellte bevorzugte Ausführungsform der erfindungsgemäßen Vorrichtung in einer Querschnittsansicht.

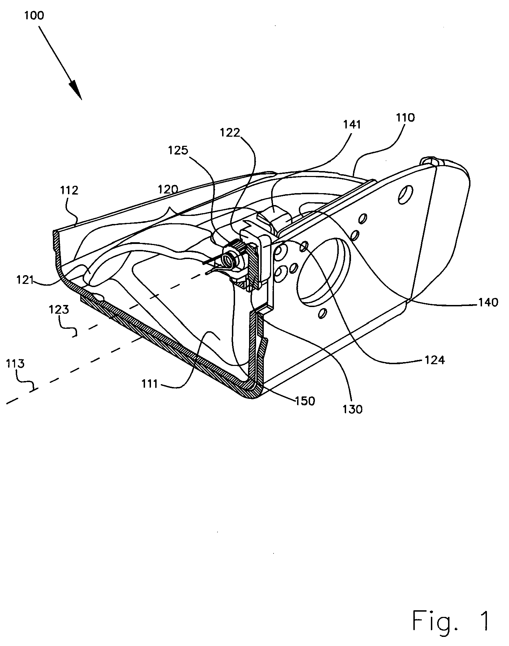

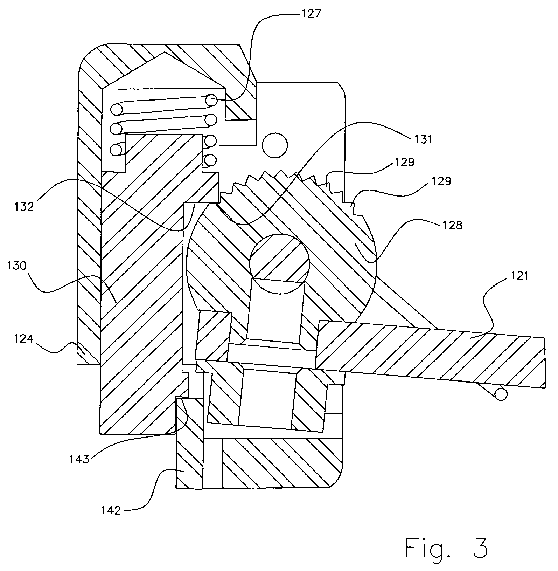

Die in den Figuren 1 und 3 dargestellte erfindungsgemäße Fußschalen-Vorrichtung 100 für ein Muskeltrainings-Gerät enthält eine Fußschale 110 mit einer Trittfläche 111 und einer die Trittfläche 111 mindestens teilweise begrenzenden Seitenwand 112 sowie einer Fixiereinrichtung 120 zum Fixieren eines menschlichen Fußes in der Fußschale 110, wobei die Fixiereinrichtung 120 als arretierbar schwenkbarer Bügel 121 ausgebildet ist, der in Richtung der Oberseite eines auf der Trittfläche 111 platzierten Fußes konkav gebogen ist, und dessen Schwenklager 122 eine im Wesentlichen parallel zur Längsachse 113 der Fußschale 110 ausgerichtete Schwenkachse 123 aufweist.

Das Schwenklager 122 ist in einer mit der Trittfläche 111 indirekt fest verbundenen Lagerungseinheit 124 vorgesehen, die an einer Seitenwand 112 der Fußschale 110 befestigt ist und über die Seitenwand 112 mit der Trittfläche 111 fest verbunden ist. Die Seitenwand 112 ist einstückig gebogen ausgeführt und umschließt den Fuß im Bereich der Ferse sowie der Fußseiten.

Das Schwenklager 122 des Bügels 121 ist ausgebildet, um eine lösbare Arretierung über einen vorgegebenen Schwenkbereich sicherzustellen, wobei zum Zweck einer lösbaren Arretierung über den vorgegebenen Schwenkbereich eine eine Sperrverzahnung 125 aufweisende Rastereinheit vorgesehen ist.

Der Schwenkbereich umfasst ausgehend von einer Position des Bügels 121 direkt oberhalb der Oberfläche eines in der Fußschale platzierten Fußes einen etwa 90° umspannenden Winkelbereich.

Die insgesamte Lagerungseinheit 120 ist im Innenbereich der Fußschale 110 angeordnet und dabei so schmal ausgebildet, dass eine Bewegung eines im Innenbereich der Fußschale 110 platzierten Fußes seitens der Lagerungseinheit 120 nur unwesentlich eingeschränkt ist.

Der Bügel 121 ist aus einer ersten Position, in der die Fußschale 110 für ein Ansetzen eines Fußes auf die Trittfläche 111 geöffnet ist, gegen die Kraft eine Feder 150 reversibel in eine arretierbare zweite Position überführbar, in der der Fuß mittels des Bügels 121 in der Fußschale 110 gefangen ist, wobei der Bügel 121 mittels der Feder 150 vorgespannt ist, um bei Lösung der Arretierung aus einer zweiten Position in die erste Position zurückzuschwenken.

Ein Ende des Bügels 121 ist in dem Schwenklager 122 mit einer drehbar gelagerten, im Bereich ihrer Mantelfläche gezahnten Scheibe 128 verbunden, deren Zähne 129 mit einer Kante 131 eines Bolzens 130 zusammenwirken, der mittels einer Feder 127 vorgespannt ist, um die Scheibe 128 in einer zweiten Position zu arretieren. Die Kante 131 ist dabei an einem Vorsprung 132 des Bolzens 130 ausgebildet.

Der Bolzen 130 ist in der Lagerungseinheit 124 reziprozierbar linear verschiebbar gelagert und gegen die Kraft der Feder 127 bewegbar, um die Kante 131 aus einem Eingriff mit einem Zahn 129 der Scheibe 128 zu nehmen, um den Bügel 121 aus einer Arretierung in einer zweiten Position zu lösen.

Ein Hebel 140, dessen freies erstes Ende 141 von Hand zu betätigen ist und dessen dem ersten Ende 141 gegenüberstehendes zweites Ende 142 mit dem Bolzen 130 zusammenwirkt, ist vorgesehen, um den Bolzen 130 gegen die Kraft der Feder 127 zu bewegen, um den Bügel 121 aus einer Arretierung in einer zweiten Position zu lösen. Zu diesem Zweck ist das zweite Ende 142 des Hebels 140 an einem an dem Bolzen 130 vorgesehenen Vorsprung 143 angesetzt.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Fußschalen-Vorrichtung (100) für ein Muskeltrainingsgerät, mit einer Fußschale (110) mit einer Trittfläche (111) und einer die Trittfläche (111) mindestens teilweise begrenzenden Seitenwand (112) sowie einer Fixiereinrichtung (120) zum Fixieren eines menschlichen Fußes in der Fußschale (110), wobei die Fixiereinrichtung (120) als ein arretierbar schwenkbarer Bügel (121) ausgebildet ist, dessen Schwenklager (122) eine im Wesentlichen parallel zur Längsachse (113) der Fußschale (110) ausgerichtete Schwenkachse (123) aufweist und in einer mit der Trittfläche (111) mindestens indirekt fest verbundenen kompakten Lagerungseinheit (124) vorgesehen ist, die an einer dem Innenrist eines Patientenfußes nahen inneren Seitenwand (112) der Fußschale (110) befestigt ist und über diese innere Seitenwand (112) mit der Trittfläche (111) fest verbunden ist.

2. Vorrichtung nach Anspruch 1, **dadurch gekennzeichnet, dass** der Bügel (121) in Richtung der Oberseite eines auf der Trittfläche (111) platzierten Fußes konkav gebogen ausgebildet ist.

3. Vorrichtung nach einem der vorhergehenden Ansprüche, **dadurch gekennzeichnet, dass** das Schwenklager (122) des Bügels (121) ausgebildet ist, um eine lösbare Arretierung über einen vorgegebenen Schwenkbereich sicherzustellen.

4. Vorrichtung nach Anspruch 3, **dadurch gekennzeichnet, dass** für eine lösbare Arretierung über den vorgegebenen Schwenkbereich eine eine Sperrverzahnung (125) aufweisende Rastereinheit vorgesehen ist.

5. Vorrichtung nach einem der Ansprüche 3 oder 4, **dadurch gekennzeichnet, dass** der Schwenkbereich ausgehend von einer Position des Bügels (121) direkt oberhalb der Oberfläche eines in der Fußschale (110) platzierten Fußes einen Winkelbereich von mindestens 80° umfasst.

6. Vorrichtung nach einem der vorhergehenden Ansprüche, **dadurch gekennzeichnet, dass** die insgesamte Lagerungseinheit (124) im Innenbereich der Fußschale (110) angeordnet ist.

7. Vorrichtung nach einem der vorhergehenden Ansprüche, **dadurch gekennzeichnet, dass** die insgesamte Lagerungseinheit (124) ausreichend schmal ausgebildet ist, um eine im Wesentlichen uneingeschränkte Bewegung eines im Innenbereich der Fußschale (110) platzierten Fußes sicherzustellen.

8. Vorrichtung nach einem der vorhergehenden Ansprüche, **dadurch gekennzeichnet, dass** die Seitenwand (112) den Fuß mindestens im Bereich der Ferse sowie der Fußseiten umschließt.

9. Vorrichtung nach einem der vorhergehenden Ansprüche, **dadurch gekennzeichnet, dass** die Seitenwand (112) einstückig gebogen ausgeführt ist.

10. Vorrichtung nach einem der vorhergehenden Ansprüche, **dadurch gekennzeichnet, dass** der Bügel (121) aus einer ersten Position, in der die Fußschale (110) für ein Ansetzen eines Fußes auf die Trittfläche (111) geöffnet ist, gegen die Kraft einer Feder (150) reversibel in eine arretierbare zweite Position überführbar ist, in der der Fuß mittels des Bügels (121) in der Fußschale (110) gefangen ist, wobei der Bügel (121) mittels der Feder (150) vorgespannt ist, um bei Lösung der Arretierung aus einer zweiten Position in die erste Position zurückzuschwenken.

11. Vorrichtung nach Anspruch 10, **dadurch gekennzeichnet, dass** ein Ende des Bügels (121) in dem Schwenklager (122) mit einer drehbar gelagerten, im Bereich ihrer Mantelfläche gezahnten Scheibe (128) verbunden ist, deren Zähne (129) mit einer Kante (131) eines Bolzens (130) zusammenwirken, der mittels einer Feder (127) vorgespannt ist, um die Scheibe (128) in einer zweiten Position zu arretieren.

12. Vorrichtung nach Anspruch 11, **dadurch gekennzeichnet, dass** die Kante (131) an einem Vorsprung (132) des Bolzens (130) ausgebildet ist.

13. Vorrichtung nach einem der Ansprüche 11 oder 12, **dadurch gekennzeichnet, dass** der Bolzen (130) in der Lagerungseinheit (124) reziprozierbar linear verschiebbar gelagert ist.

14. Vorrichtung nach einem der Ansprüche 11 bis 13, **dadurch gekennzeichnet, dass** der Bolzen (130) gegen die Kraft der Feder (127) bewegbar ist, um die Kante (131) aus einem Eingriff mit einem Zahn (129) der Scheibe (128) zu nehmen, um den Bügel (121) aus einer Arretierung in einer zweiten Position zu lösen.

15. Vorrichtung nach Anspruch 14, **dadurch gekennzeichnet, dass** ein Hebel (140) vorgesehen ist, dessen freies erstes Ende (141) von Hand zu betätigen ist und dessen dem ersten Ende (141) gegenüberstehendes zweites Ende (142) mit dem Bolzen (130) zusammenwirkt, um den Bolzen (130) gegen die Kraft der Feder (127) zu bewegen, um den Bügel (121) aus einer Arretierung in einer zweiten Position zu lösen.

16. Vorrichtung nach Anspruch 15, **dadurch gekennzeichnet, dass** das zweite Ende (142) des Hebels (140) an einem an dem Bolzen (130) vorgesehenen Vorsprung (143) angesetzt ist.

## Claims

1. A foot rest apparatus (100) of a muscle training device, having a foot rest (110), with a tread (111) and a side wall (112), at least partially limiting the tread (111), and a fixation unit (120) for fixing a human foot in the foot rest (110), wherein the fixation unit (120) is formed as a lockable, pivotable bracket (121), whose pivot bearing (122) has a pivot axis (123) oriented substantially parallel to the longitudinal axis (113) of the foot rest (110) and is provided in a compact bearing unit (124), which is connected fixedly at least indirectly to the tread (111), and which is attached to an inner side wall (112) of the foot rest (110), close to the inner side of a patient's foot, and is connected fixedly to the tread (111) via said inner side wall (112).

2. The apparatus according to claim 1, **characterized in that** the bracket (121) is formed curved concavely in the direction of the top side of a foot placed on the tread (111).

3. The apparatus according to any one of the preceding claims, **characterized in that** the pivot bearing (122) of the bracket (121) is formed to assure a releasable locking over a predefined pivot range.

4. The apparatus according to claim 3, **characterized in that** for a releasable locking over the predefined pivot range a ratchet unit having locking teeth (125) is provided.

5. The apparatus according to either claim 3 or 4, **characterized in that** the pivot range starting from a position of the bracket (121) directly above the surface of a foot placed in the foot rest (110) comprises an angle range of at least 80°.

6. The apparatus according to any one of the preceding claims, **characterized in that** the entire bearing unit (124) is arranged in the interior of the foot rest (110).

7. The apparatus according to any one of the preceding claims, **characterized in that** the entire bearing unit (124) is formed sufficiently narrow to assure a substantially unrestricted movement of a foot placed in the interior of the foot rest (110).

8. The apparatus according to any one of the preceding claims, **characterized in that** the side wall (112) surrounds the foot at least in the area of the heel and the sides of the foot.

9. The apparatus according to any one of the preceding claims, **characterized in that** the side wall (112) is made curved as a single piece.

10. The apparatus according to any one of the preceding claims, **characterized in that** the bracket (121) from a first position, in which the foot rest (110) is opened for positioning of a foot on the tread (111), can be moved against the force of a spring (150) reversibly to a lockable second position, in which the foot is held trapped by means of the bracket (121) in the foot rest (110), whereby the bracket (121) is pretensioned by the spring (150) in order to pivot back from a second position to the first position when the locking is released.

11. The apparatus according to claim 10, **characterized in that** one end of the bracket (121) in the pivot bearing (122) is connected to a rotatably mounted disk (128), which is toothed in the area of its outside surface and whose teeth (129) work together with an edge (131) of a pin (130), which is pretensioned by means of a spring (127), to lock the disk (128) in a second position.

12. The apparatus according to claim 11, **characterized in that** the edge (131) is formed on a projection (132) of the pin (130).

13. The apparatus according to either claim 11 or 12, **characterized in that** the pin (130) is positioned in the bearing unit (124) slideable reciprocally and linearly.

14. The apparatus according to any one of claims 11 through 13, **characterized in that** the pin (130) is movable against the force of the spring (127), in order to remove the edge (131) from engagement with a tooth (129) of the disk (128), to release the bracket (121) from locking in a second position.

15. The apparatus according to claim 14, **characterized in that** a lever (140) is provided whose free first end (141) is to be actuated manually and whose second end (142) opposite to the first end (141), works together with the pin (130), to move the pin (130) against the force of the spring (127) in order to release the bracket (121) from locking in a second position.

16. The apparatus according to claim 15, **characterized in that** the second end (142) of the lever (140) is applied at a projection (143) provided on the pin (130).

## Revendications

1. Dispositif à coque repose-pied (100) destiné à un appareil de musculation, comprenant une coque repose-pied (110), dotée d'une surface d'appui de pied (111), et une paroi latérale (112) délimitant au moins en partie la surface d'appui de pied (111), ainsi qu'un dispositif de maintien (120) destiné à maintenir un pied humain dans la coque repose-pied (110),
sachant que le dispositif de maintien (120) est réalisé comme étrier (121) pivotant avec possibilité de verrouillage, dont le palier pivotant (122) présente un axe de pivotement (123), orienté de façon sensiblement parallèle à l'axe longitudinal (113) de la coque repose-pied (110), et est prévu dans une unité de support (124) compacte qui est reliée au moins indirectement de façon solide à la surface d'appui de pied (111) et est fixée à une paroi latérale (112) intérieure de la coque repose-pied (110), située à proximité du cou-de-pied intérieur du pied d'un patient et est reliée solidement à la surface d'appui de pied (111), par l'intermédiaire de cette paroi latérale (112) intérieure.

2. Dispositif selon la revendication 1, **caractérisé en ce que** l'étrier (121) est réalisé sous une forme incurvée concave, en direction de la face supérieure d'un pied placé sur la surface d'appui de pied (111).

3. Dispositif selon l'une des revendications précédentes, **caractérisé en ce que** le palier pivotant (122) de l'étrier (121) est agencé pour garantir un verrouillage libérable sur une plage de pivotement prédéterminé.

4. Dispositif selon la revendication 3, **caractérisé en ce que** pour un verrouillage libérable sur la plage de pivotement prédéterminée, il est prévu une unité d'encliquetage présentant une denture de blocage (125)

5. Dispositif selon l'une des revendications 3 ou 4, **caractérisé en ce que**, partant d'une position de l'étrier (121) directement au-dessus de la surface d'un pied placé dans la coque repose-pied (110), la plage de pivotement comprend une plage angulaire d'au moins 80°.

6. Dispositif selon l'une des revendications précédentes, **caractérisé en ce que** l'unité de support (124) est disposée dans son ensemble dans la zone interne de la coque repose-pied (110).

7. Dispositif selon l'une des revendications précédentes, **caractérisé en ce que** l'unité de support (124) dans son ensemble est réalisée de façon suffisamment étroite pour garantir un mouvement sensiblement sans restrictions d'un pied placé dans la zone interne de la coque repose-pied (110).

8. Dispositif selon l'une des revendications précédentes, **caractérisé en ce que** la paroi latérale (112) entoure le pied au moins dans la région du talon ainsi que des côtés du pied.

9. Dispositif selon l'une des revendications précédentes, **caractérisé en ce que** la paroi latérale (112) est réalisée sous une forme monobloc incurvée.

10. Dispositif selon l'une des revendications précédentes, **caractérisé en ce que** l'étrier (121) peut être amené d'une première position, dans laquelle la coque repose-pied (110) est ouverte pour une mise en place d'un pied sur la surface d'appui de pied (111), à l'encontre de la force d'un ressort (150), de manière réversible dans une deuxième position verrouillable, dans laquelle le pied est retenu au moyen de l'étrier (121) dans la coque repose-pied (110), l'étrier (121) étant mis sous précontrainte au moyen du ressort (150) afin de revenir par pivotement d'une deuxième position dans la première position, lors de la libération du verrouillage.

11. Dispositif selon la revendication 10, **caractérisé en ce qu'**une extrémité de l'étrier (121) est reliée dans le palier pivotant (122) à un disque (128) monté pivotant et denté dans la région de sa surface enveloppe, dont les dents (129) coopèrent avec une arête (131) d'un goujon (130) qui est mis sous précontrainte au moyen d'un ressort (127), afin de verrouiller le disque (128) dans une deuxième position.

12. Dispositif selon la revendication 11, **caractérisé en ce que** l'arête (131) est réalisée sur une saillie (132) du goujon (130).

13. Dispositif selon l'une des revendications 11 ou 12, **caractérisé en ce que** le boulon (130) est monté dans l'unité de support (124) avec possibilité de déplacement linéaire alternatif.

14. Dispositif selon l'une des revendications 11 à 13, **caractérisé en ce que** le boulon (130) peut être déplacé à rencontre de la force du ressort (127) pour retirer l'arête (131) d'une prise avec une dent (129) du disque (128), en vue de libérer l'étrier (121) d'un verrouillage dans une deuxième position.

15. Dispositif selon la revendication 14, **caractérisé en ce qu'**il est prévu un levier (140) dont la première extrémité (141) libre est actionnée à la main et dont la deuxième extrémité (142), opposée à la première extrémité (141), coopère avec le goujon (130) afin de déplacer le goujon (121) à l'encontre de la force du ressort (127), en vue de libérer l'étrier (121) de son verrouillage dans une deuxième position.

16. Dispositif selon la revendication 15, **caractérisé en ce que** la deuxième extrémité (142) du levier (140) est en appui sur une saillie (143) prévue sur le goujon (130).
